# EUROPEAN PATENT APPLICATION

(11) **EP 4 671 744 A1**
(43) Date of publication of application: **31.12.2025**
(21) Application number: 25177651.4
(22) Date of filing: 20.05.2025
(51) Int. Cl.: G01N 21/94, G01N 21/958

(54) **SYSTEM FOR WINDSHIELD RESIDUE DETECTION AND QUANTIFICATION**

(30) Priority: 28.06.2024 US 202463665716 P; 30.09.2024 US 202418902603
(71) Applicant: Tesla, Inc., Austin, TX 78725 (US)
(72) Inventor: ZHENG, Jiasen, Austin, Texas, 78725 (US); PADUCHURU SUBRAMANYAM, Karthik, Austin, Texas, 78725 (US); HETTIARACHCHI, Brian, Austin, Texas, 78725 (US); MA, Lily, Austin, Texas, 78725 (US)
(74) Representative: Liesegang, Eva

(57) **Abstract**

Some embodiments of the present disclosure relate to systems and methods for detecting and quantifying residues on a surface, such as a windshield, for a vehicle. In some embodiments, a system may include a light source assembly, a camera assembly, and a computing device. The light source assembly can direct a polarized light toward the surface. The camera assembly can capture the polarized light reflected from the surface to generate an image. The computing device can process the image to generate a processing result indicative of cleanliness of the surface.

## Description

### CROSS-REFERENCE TO PRIORITY APPLICATION

This application claims priority to U.S. Provisional Patent Application No. 63/665,716, entitled "SYSTEM FOR WINDSHIELD RESIDUE DETECTION AND QUANTIFICATION," filed on June 28, 2024, the technical disclosure of which is hereby incorporated by reference in its entirety and for all purposes.

### TECHNICAL FIELD

The present disclosure relates to systems and methods for detecting residues. More particularly, embodiments of the present disclosure relate to systems and methods for detecting and quantifying residues on windshields for vehicles.

### BACKGROUND

Ensuring the cleanliness of vehicle surfaces can be significant for both aesthetic and functional reasons in automotive manufacturing. For example, contaminations on a windshield assembly can affect the overall quality and performance of a vehicle.

Existing solutions for determining windshield cleanliness often rely on manual inspection, which can be laborious and time-consuming. Additionally, these solutions may generate results that are subjective or inaccurate. These constraints can render such methods sub-optimal for high-volume windshield production or implementing effective factory gating processes to allow components meeting specific standards to proceed to the next stage of manufacturing. As such, it may be desirable to develop more reliable systems for detecting, measuring, or quantifying windshield residues.

### SUMMARY OF CERTAIN INVENTIVE ASPECTS

The systems, methods and devices of this disclosure each have several innovative embodiments, no single one of which is solely responsible for all of the desirable attributes disclosed herein. Details of one or more implementations of the subject matter described in this specification are set forth in the accompanying drawings and the description below.

In some aspects, the techniques described herein relate to a method for detecting residues on a windshield, the method including: directing polarized light toward the windshield; generating an image based on the polarized light reflected from the windshield; and processing the image to generate a processing result indicative of cleanliness of the windshield.

In some aspects, the techniques described herein relate to a method, wherein the polarized light is a blue polarized light.

In some aspects, the techniques described herein relate to a method, wherein processing the image includes: identifying, based at least on a frit region associated with the windshield, a region of interest (ROI) associated with the image; and calculating, based on pixels within the ROI associated with the image, one or more metrics, wherein the processing result is generated based on the one or more metrics.

In some aspects, the techniques described herein relate to a method, wherein the one or more metrics are calculated based on at least one of an angle of polarization associated with the image or a degree of polarization associated with the image.

In some aspects, the techniques described herein relate to a method, wherein calculating the one or more metrics includes: deriving angles of polarization associated with the image; and deriving a mean and a standard deviation associated with the angles of polarization.

In some aspects, the techniques described herein relate to a method, wherein the image is associated with four polarization directions.

In some aspects, the techniques described herein relate to a method, wherein the polarized light is directed toward the windshield at an angle in a range from 50 degrees to 70 degrees.

In some aspects, the techniques described herein relate to a method, wherein the polarized light is captured at an azimuth angle that is in a range from 15 degrees to 45 degrees.

In some aspects, the techniques described herein relate to a method, wherein directing the polarized light includes: emitting a collimated light; and polarizing, using a polarizing film, the collimated light to generate the polarized light.

In some aspects, the techniques described herein relate to a system for detecting residues on a surface associated with a vehicle, the system including: a light source assembly configured to direct a polarized light toward the surface; a camera assembly configured to capture the polarized light reflected from the surface to generate an image; and a computing device in communication with the camera assembly, the computing device configured to process the image to generate a processing result indicative of cleanliness of the surface.

In some aspects, the techniques described herein relate to a system, further including a dark box configured to enclose the light source assembly, the camera assembly, and the surface associated with the vehicle.

In some aspects, the techniques described herein relate to a system, wherein the light source assembly includes: a light source configured to emit a collimated light; and a polarizing film configured to polarize the collimated light to generate the polarized light.

In some aspects, the techniques described herein relate to a system, wherein the camera assembly includes a sensor configured to generate the image in four polarization directions. The sensor can be a monochrome sensor or a colored sensor.

In some aspects, the techniques described herein relate to a system, wherein the computing device includes at least one of central processing unit (CPU) or a graphics processing unit (GPU).

In some aspects, the techniques described herein relate to a system, wherein the surface is a windshield, and wherein the computing device is configured to process the image by at least: identifying, based at least on a frit associated with the windshield, a region of interest (ROI) associated with the image; and calculating, based on pixels within the ROI associated with the image, one or more metrics, wherein the processing result is generated based on the one or more metrics.

In some aspects, the techniques described herein relate to a system, wherein the one or more metrics are calculated based on at least one of an angle of polarization associated with the image and a degree of polarization associated with the image.

In some aspects, the techniques described herein relate to a system, wherein the polarized light is a polarized blue light or a polarized white light.

In some aspects, the techniques described herein relate to a system, wherein the computing device is configured to calculate the one or more metrics by at least: deriving angles of polarization associated with the image; and deriving a mean and a standard deviation associated with the angles of polarization as the one or more metrics.

In some aspects, the techniques described herein relate to a system, wherein the light source assembly is configured to direct the polarized light toward the surface at an angle in a range from 55 degrees to 65 degrees.

In some aspects, the techniques described herein relate to a system, wherein the camera assembly is configured to capture the polarized light at an azimuth angle in a range from 15 degrees to 45 degrees.

In some aspects, the techniques described herein relate to a system, wherein the polarized light is a blue polarized light.

### BRIEF DESCRIPTION OF THE DRAWINGS

Throughout the drawings, reference numbers are re-used to indicate correspondence between referenced elements. The drawings are provided to illustrate examples of the subject matter described herein and not to limit the scope thereof.

Embodiments of the present disclosure are described with reference to the accompanying drawings, in which like reference characters reference like elements, and wherein:
FIG. 1 illustrates a block diagram of a system for detecting residues on a surface (e.g., a windshield for a vehicle) using polarized light.
FIG. 2 illustrates a perspective view of a setup of the system of FIG. 1 with polarized light and camera positioning for windshield residue detection in accordance with embodiments of the present disclosure.
FIG. 3 illustrates another perspective view of the setup of the system of FIG. 1 in accordance with embodiments of the present disclosure.
FIG. 4 illustrates an example process for detecting residue on a windshield in accordance with embodiments of the present disclosure.
FIG. 5 shows an example image including a region of interest (ROI) for windshield residue detection in accordance with embodiments of the present disclosure.
FIG. 6 shows an example image illustrating a frit region and areas marked as clean and dirty on a windshield by the system of FIG. 1 in accordance with embodiments of the present disclosure.
FIG. 7 shows a detected ROI on a clean windshield and the corresponding clean metric generated by the system of FIG. 1 in accordance with embodiments of the present disclosure.
FIG. 8 shows an example dirty windshield and the corresponding cleanliness metric generated by the system of FIG. 1 in accordance with embodiments of the present disclosure.
FIG. 9 illustrates two-dimensional (2D) histograms of the degree of polarization and angle of polarization for different cleanliness levels within a ROI in accordance with embodiments of the present disclosure.

### DETAILED DESCRIPTION OF CERTAIN EMBODIMENTS

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure relate to systems and methods that detect, measure, and/or quantify residue on surface(s) associated with a vehicle. More specifically, embodiments of the present disclosure disclose a flow or a system that combines advanced computer vision algorithms with specialized hardware (e.g., a light source assembly emitting polarized light and a camera assembly that includes a polarization camera) to accurately identify and quantify various types of residues on a windshield. Advantageously, by integrating techniques or devices related to polarization imaging, specialized lighting, and advanced image processing, the system can detect and quantify windshield residues in a reliable, repeatable, and efficient manner under controlled environments, thereby facilitating implementation of high-volume windshield production or effective factory gating processes in automotive manufacturing.

Cleanliness of vehicle surfaces (e.g., a windshield, a glass surface of a vehicle, a plastic surface of a vehicle, or the like) can be significant for both aesthetic and performance reasons. For example, cleanliness of the windshield in front of a camera can be significant for maintaining desired and/or optimal image quality. Such image quality can be significant for driver assistance features and/or full self-driving applications. A residue, smudge, or wiping streak can impact the performance of full self-driving systems. However, current windshield residue inspection methods are often manual, subjective, and/or inaccurate. Such methods can involve significant time and labor resources. These constraints can render such methods sub-optimal for high-volume windshield production.

To address at least a portion of the above identified technical problems, aspects of the disclosed technology relate to a system or a process that can be utilized to effectively detect various types of residues, thereby enabling entities such as windshield manufacturers to properly clean and gate non-compliant windshields. In some embodiments, to detect residues on a surface associated with a vehicle (e.g., a windshield, a glass surface of a vehicle, a plastic surface of a vehicle, or the like), a light source assembly (e.g., a light source and a polarizing film or a polarized light source) may direct a polarized light toward the surface to generate a reflected light from the surface. A camera assembly (e.g., a polarization camera with a sensor, such as a monochrome sensor or a colored sensor) may capture the reflected light from the surface to generate polarized images. The camera assembly can include any suitable sensor and lens. A computing device can include a processing circuit (e.g., a central processing unit (CPU), a graphics processing unit (GPU), or a digital signal processor (DSP) of a computing device) in communication with the camera assembly may process the polarized image to generate a processing result indicative the surface cleanliness. To generate more accurate detection results, the light source assembly, the camera assembly, and the surface associated with the vehicle may be enclosed in a dark box that can create a controlled and dark environment for reducing or eliminating interferences from unwanted external light sources (e.g., stray light). In some other applications, the light assembly and the camera assembly can be in a dark room.

In some embodiments, the light source assembly may employ a light source (e.g., a collimated light emitting diode (LED)) for emitting a collimated light to uniformly illuminate a windshield for capturing high quality images. This can reduce or eliminate shadows or uneven lighting that may obscure residues or affect accuracy of the detection process. The collimated light may also reduce scattering to ensure light remains focused on the area of interest, and provide consistent lighting for each detection or inspection so as to generate repeatable and reliable detection results. To enhance contrast of residues on a windshield, the light source assembly may polarize the collimated light (e.g., using a polarizing film) to generate polarized light (e.g., polarized blue light, polarized white light, or the like) for illuminating the windshield. The polarized light can be blue polarized light. Blue light can have a wavelength in a range from 380 nanometers (nm) to 500 nm, such as in a range from 400 nm to 495 nm. Blue polarized can have advantageous scattering properties. Blue polarized light can achieve desirable signal-to-noise (SNR) ratios. In some applications, the light source can be a polarized light source. The polarized light can interact differently with clean and contaminated areas of the windshield (e.g., the polarized light may be reflected more in the contaminated areas), making residues more visible when inspected or analyzed through polarized image(s) generated by the polarization camera. In some examples, the polarizing film can be attached at zero degrees to the light source, further enhancing contrast between clean and contaminated areas on the windshield to improve the accuracy of residue detection. The use of the polarizing film, in conjunction with the dark box, may also reduce the impact of any interference from ambient light.

Additionally and/or optionally, the system may further utilize a Brewster angle (e.g., polarization angle) to reduce glare and enhance contrast for achieving more accurate residue detection. The Brewster angle is the angle of incidence at which light with a particular polarization is perfectly transmitted through a transparent dielectric surface without any reflection. In some embodiments, the light source (e.g., a blue light source, a white light source, or any other suitable colored light source) may be positioned at an angle at or close to the Brewster angle relative to the vertical axis of the windshield. The angle may be about sixty degrees, with a tolerance of plus or minus five to ten degrees, depending on the material and curvature of the windshield. By illuminating the windshield at the angle, the system may increase the contrast between clean and contaminated areas and/or reduce unwanted reflections from the surface of the windshield.

The reflected light from the surface (e.g., the windshield, a glass surface of the vehicle, a plastic surface of the vehicle, or the like) of the vehicle can be captured using the polarization camera. The polarization camera may include a sensor (e.g., a monochrome sensor or a colored sensor) for generating polarized images in one or more polarization directions. For example, the polarized images may be associated with four polarization directions (e.g., 0 degrees, 45 degrees, 90 degrees, and 135 degrees). To increase the amount of reflected light captured for generating polarized images, the camera assembly may utilize a polarization camera to capture the reflected light under an azimuth angle. The azimuth angle may be the angle between the projection of the polarization camera's optical axis onto a reference plane (e.g., a horizontal plane) and a reference direction (e.g., the direction of the incident light). In some examples, the azimuth angle may be thirty degrees, with a tolerance of plus or minus fifteen degrees.

In some embodiments, the camera exposure time of the polarization camera can be adjusted to capture or collect more polarized light. For example, the camera exposure time can be set to about one second (e.g., a one second exposure time) to collect more signals from the polarized light than for a shorter camera exposure time. In some embodiments, the system can adjust the camera exposure time based on light intensity of the polarized light. For example, the system may lower the camera exposure time when a light intensity from a light source of the light source assembly is lower, and may increase the camera exposure time when a light intensity from a light source of the light source assembly is higher.

As noted above, the surface associated with the vehicle can be a windshield of the vehicle. To detect residue on the windshield, the system can determine or identify a region of interest (ROI) associated with the windshield. The ROI can correspond to a specific area of the windshield that is analyzed for cleanliness, for example, using computer vision algorithms. In some embodiments, the ROI can be determined based on a frit region associated with the windshield. More specifically, the polarization camera's position can be used to initially capture a reference image that includes the desired area of the windshield to be analyzed. The ROI can be selected based on the reference image to ensure that the frit region is within the polarization camera's field of view (FOV) and does not cross the image boundaries. More specifically, in some embodiments, the ROI can be selected by a machine learning model (e.g., an image segmentation model). An image segmentation model for selecting the ROI can be trained using images that include frit regions that are labelled for training. The system can match or align one or more subsequent polarized images that are captured for detecting residue based on the ROI to ensure that the same area of the windshield is consistently analyzed, thereby achieving repeatable and reliable results. In some applications, residue detection can be performed on two or more ROIs of a surface.

As also noted above, the polarization camera may capture light (e.g., a reflected light) reflected from a windshield to generate polarized images in four polarization directions (e.g., 0 degrees, 45 degrees, 90 degrees, and 135 degrees). The processing circuit may process the polarized images to calculate the degree of polarization (DoP) and the angle of polarization (AoP) for each pixel in each polarized image. The DoP may be a measure of how much the reflected light is polarized. The AoP may indicate the direction of the polarization. In some embodiments, the processing circuit may convert the DoP and AoP into a visual representation using a hue, saturation, value (HSV) color model. The DoP may be mapped to the hue component, the AoP may be mapped to the saturation component, and the value component can be fixed to a constant value to ensure consistent brightness of generated images. The processing circuit may further convert the generated images to red, green, blue (RGB) image for visually representing the polarization characteristics of the residues, making it easier for residue identification and analysis purposes.

To provide a quantitative measure of the cleanliness of the windshield, the processing circuit may derive one or more quality metrics (e.g., a cleanliness score, a mean of the AoP and/or DoP, and/or a standard deviation of the AoP and/or DoP) based on the DoP and AoP associated with pixels within a region of interest (ROI). For example, the processing circuit may generate a quality metric by averaging the DoP and AoP for all pixels within the ROI. As another example, the processing circuit may generate one-dimensional (1D) histograms for the DoP or AoP associated with pixels within the ROI. The 1D histograms may show the distribution of the DoP or AoP values, providing insights into the variability and consistency of the polarization characteristics across the ROI. The 1D histograms can indicate or represent a distribution of residues. For example, peaks in the 1D histograms may indicate higher concentrations of residues, while a uniform distribution of the 1D histograms may suggest a cleaner surface. As yet another example, the processing circuit may generate a two-dimensional (2D) histogram that combines the DoP and AoP values within the ROI. The 2D histogram can provide a more comprehensive view of the polarization characteristics by showing the relationship between the degree and angle of polarization. Clusters in the 2D histogram can help identify specific types of residues or contamination patterns. For example, the 2D histogram can indicate the mean and standard variation associated with the DoP and/or the AoP. A fully clean windshield may correspond to DoP and/or AoP with certain ranges of mean and less standard deviation, while windshield with more residues may exhibit distinct ranges of mean and larger variations of the DoP and/or AoP. By analyzing the one or more quality metrics (e.g., mean and standard variations of the AoP and/or DoP), the processing circuit may generate a processing result (e.g., a pass or fail indicator) to indicate whether the windshield satisfies a cleanliness criterion or test.

Although the various aspects will be described in accordance with illustrative embodiments and combinations of features, one skilled in the relevant art will appreciate that the examples and combinations of features are illustrative in nature and should not necessarily be construed as limiting. More specifically, aspects of the present application may be applicable with various types of surfaces (e.g., windshield such as a front windshield and/or a rear windshield, windows, moonroof, a glass roof, or the like) associated with a vehicle under different contexts. Still further, although specific architectures of circuitry block diagrams or flows for detecting residue or contamination associated with a windshield will be described, such illustrative circuitry block diagrams or flowchart or architecture should not necessarily be construed as limiting. Accordingly, one skilled in the relevant field of technology will appreciate that the aspects of the present application are not necessarily limited to being applied to any particular types of surfaces associated with vehicles.

### Example System Block Diagram

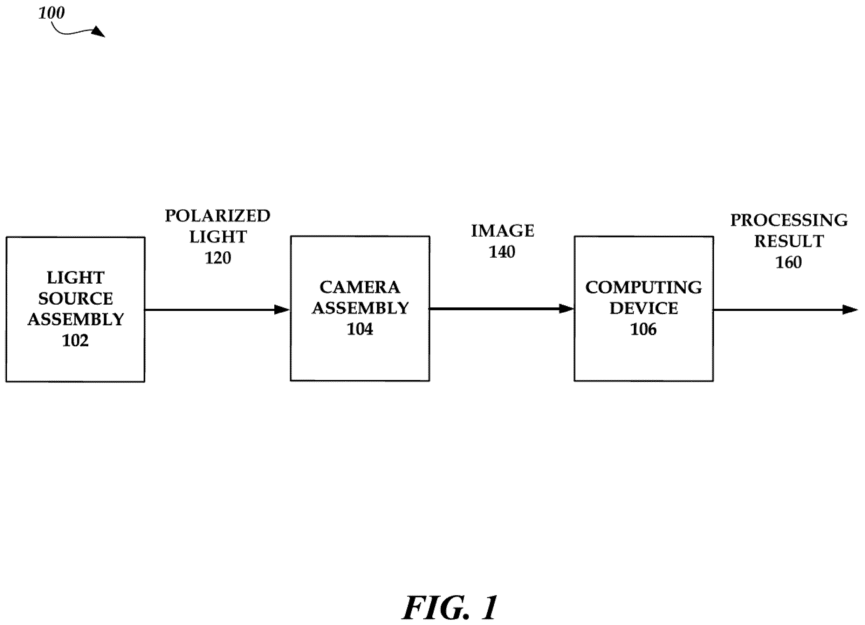

FIG. 1 illustrates a system 100 (e.g., a residue detection system) for detecting residues on a surface (e.g., a windshield, a glass surface, or a plastic surface not shown in FIG. 1) associated with a vehicle using polarized light. The system 100 can detect residue on the surface prior to the surface being installed on a vehicle. Accordingly, the system 100 can perform a check to ensure that the surface is sufficiently clean before being installed on a vehicle. In the case that the surface does not pass the cleanliness check performed by the system 100, the surface can be cleaned and checked again for cleanliness. The system 100 may include a light source assembly 102, a camera assembly 104, and a computing device 106. The light source assembly 102 may direct polarized light 120 toward the surface. The camera assembly 104 may capture the polarized light 120 reflected from the surface to generate one or more images 140. The computing device 106 may process an image 140 to generate a processing result 160 indicative of the cleanliness of the surface.

More specifically, in some embodiments, the light source assembly 102 (e.g., a light source and a polarizing film or a polarized light source) may direct the polarized light 120 toward the surface to generate a reflected light from the surface. The camera assembly 104 (e.g., a polarization camera with a monochrome sensor or a colored sensor) may capture the reflected light from the surface to generate polarized images. The computing device 106 (e.g., a device including one or more of a central processing unit (CPU), a graphics processing unit (GPU), or a digital signal processor (DSP)) in communication with the camera assembly 104 may process one or more images 140 to generate a processing result indicative the surface cleanliness. To generate more accurate detection results, the light source assembly 102, the camera assembly 104, and the surface associated with the vehicle may be enclosed in a dark box (not shown in FIG. 1) that can create a controlled and dark environment for reducing or eliminating interferences from unwanted external light sources (e.g., stray light). In some other applications, the light source assembly 102 and the camera assembly 104 can be in a dark room.

In some embodiments, the camera assembly 104 may include a light source (e.g., a collimated light emitting diode (LED)) for emitting a collimated light to uniformly illuminate a windshield for capturing high quality images. This can reduce or eliminate shadows or uneven lighting that may obscure residues or affect accuracy of the residue and/or ROI detection process. The collimated light may reduce scattering to ensure light remains focused on the area of interest. The collimated light may provide consistent lighting for each detection or inspection so as to generate repeatable and reliable detection results. To enhance contrast of residues on a windshield, the light source assembly 102 may polarize the collimated light (e.g., using a polarizing film) to generate polarized light (e.g., polarized blue light) for illuminating the windshield. In some applications, the light source can be a polarized light source. The polarized light 120 can interact differently with clean and contaminated areas of the windshield (e.g., the polarized light may be reflected more in the contaminated areas than in uncontaminated areas), making residues more visible when inspected or analyzed through polarized image(s) generated by a polarization camera of the camera assembly 104. In some examples, the polarizing film can be attached at zero degrees relative to the light source, further enhancing contrast between clean and contaminated areas on the windshield to improve the accuracy of residue detection. The use of the polarizing film, in conjunction with the dark box, may also reduce the impact of any interference from ambient light.

Additionally and/or optionally, the system 100 may further utilize a Brewster angle (e.g., polarization angle) to reduce glare and enhance contrast for achieving more accurate residue detection. The Brewster angle is the angle of incidence at which light with a particular polarization is perfectly transmitted through a transparent dielectric surface without any reflection. In some embodiments, a light source (e.g., a blue light source, a white light source with a blue filter, a white light source, or any other suitable colored light source) of the light source assembly 102 may be positioned at an angle at or close to the Brewster angle relative to the vertical axis of the windshield. The angle may be about sixty degrees, with a tolerance of plus or minus five to ten degrees, depending on the material and curvature of the windshield. By illuminating the windshield at the angle, the system 100 may increase the contrast between clean and contaminated areas and/or reduce unwanted reflections from the windshield.

The reflected light from the surface (e.g., the windshield, a glass surface of the vehicle, or a plastic surface of the vehicle) for the vehicle can be captured using a polarization camera of the camera assembly 104. The polarization camera may include a sensor (e.g., a monochrome sensor or a colored sensor) for generating the image 140 in one or more polarization directions. For example, the image 140 may be associated with four polarization directions (e.g., 0 degrees, 45 degrees, 90 degrees, and 135 degrees). To increase the amount of reflected light captured for generating the image 140, the camera assembly 104 may utilize the polarization camera of the camera assembly 104 to capture the reflected light under an azimuth angle. The azimuth angle may be the angle between the projection of the polarization camera's optical axis onto a reference plane (e.g., a horizontal plane) and a reference direction (e.g., the direction of the incident light). In some examples, the azimuth angle may be thirty degrees, with a tolerance of plus or minus five degrees (e.g., from 25 degrees to 35 degrees), a tolerance of plus or minus ten degrees (e.g., from 20 degrees to 40 degrees), or a tolerance of plus or minus fifteen degrees (e.g., from 15 degrees to 45 degrees).

As noted above, the surface associated with the vehicle can be a windshield of the vehicle. To detect residue on the windshield, the system 100 can determine or identify a region of interest (ROI) associated with the windshield. The ROI can correspond to a specific area of the windshield that is analyzed for cleanliness, for example, using computer vision algorithms. In some embodiments, the ROI can be determined based on a frit region associated with the windshield. More specifically, a position of the polarization camera of the camera assembly 104 can be used to initially capture a reference image that includes the desired area of the windshield to be analyzed. The ROI can be selected based on the reference image to ensure that the frit region is within the polarization camera's FOV and does not cross the image boundaries. The system 100 (e.g., the computing device 106) can match or align one or more subsequent polarized images that are captured for detecting residue based on the ROI to ensure that the same area of the windshield is consistently analyzed, thereby achieving repeatable and reliable results.

As also noted above, the polarization camera of the camera assembly 104 may capture light (e.g., a reflected light) reflected from a windshield to generate polarized images in four polarization directions (e.g., 0 degrees, 45 degrees, 90 degrees, and 135 degrees). The computing device 106 may process the polarized images to calculate the degree of polarization (DoP) and the angle of polarization (AoP) for each pixel in each polarized image. The DoP may be a measure of how much the reflected light is polarized. The AoP may indicate the direction of the polarization. In some embodiments, the computing device 106 may convert the DoP and AoP into a visual representation using a hue, saturation, value (HSV) color model. The DoP may be mapped to the hue component, the AoP may be mapped to the saturation component, and the value component can be fixed to a generally constant value to ensure consistent brightness of generated images. The computing device 106 may further convert the generated images to red, green, blue (RGB) images for visually representing the polarization characteristics of the residues, making it easier for residue identification and analysis purposes.

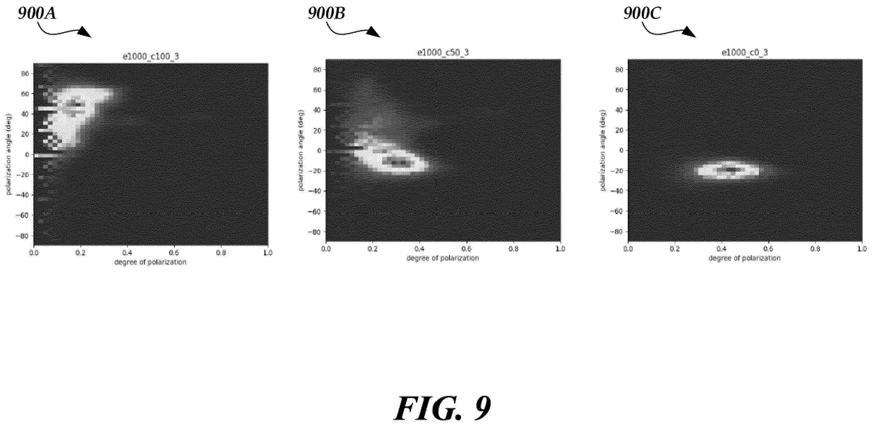

To provide a quantitative measure of the cleanliness of the windshield, the computing device 106 may derive one or more quality metrics (e.g., a cleanliness score, a mean of the AoP and/or DoP, and/or a standard deviation of the AoP and/or DoP) based on the DoP and AoP associated with pixels within a region of interest (ROI). For example, the computing device 106 may generate a quality metric by averaging the DoP and AoP for all pixels within the ROI. As another example, the computing device 106 may generate one-dimensional (1D) histograms for the DoP or AoP associated with pixels within the ROI. The 1D histograms may show the distribution of the DoP or AoP values, providing insights into the variability and consistency of the polarization characteristics across the ROI. The 1D histograms can indicate or represent distribution of residues. For example, peaks in the 1D histograms may indicate higher concentrations of residues, while a uniform distribution of the 1D histograms may suggest a cleaner surface. As yet another example, the computing device 106 may generate a two-dimensional (2D) histogram that combines the DoP and AoP values within the ROI. The 2D histogram can provide a more comprehensive view of the polarization characteristics by showing the relationship between the degree and angle of polarization. Clusters in the 2D histogram can be used to identify specific types of residues and/or contamination patterns. For example, the 2D histogram can indicate the mean and standard variation associated with the DoP and/or the AoP. As will be illustrated in FIG. 9, a fully clean windshield may correspond to DoP and/or AoP with certain ranges of mean and lower standard deviation, while windshield with more residues may exhibit distinct ranges of mean and larger variations of the DoP and/or AoP. By analyzing the one or more quality metrics, the computing device 106 may generate a processing result (e.g., a pass or fail indicator) to indicate whether the windshield satisfies a cleanliness criterion or test.

### Example System Setup

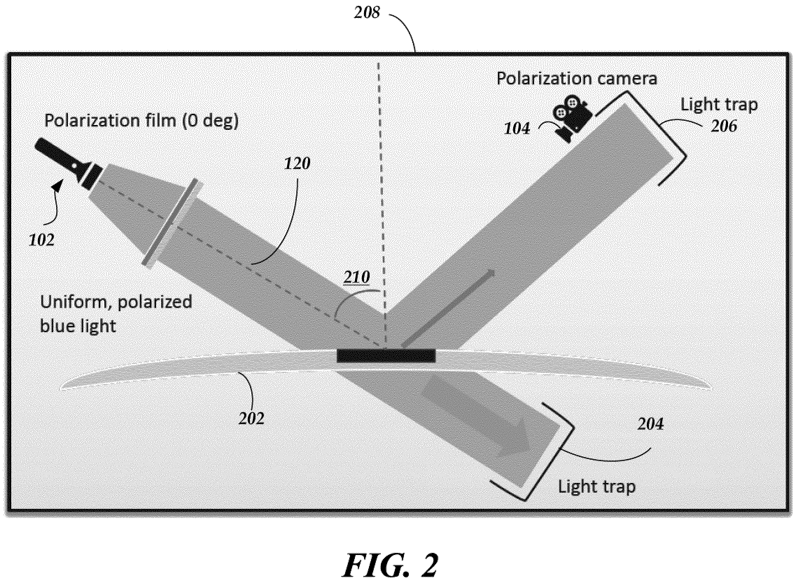

FIG. 2 illustrates a perspective view of a setup of the system 100 of FIG. 1 for windshield residue detection in accordance with embodiments of the present disclosure. The system 100 is illustrated with a windshield 202 for which the system 100 performs residue detection. The residue detection can be performed before the windshield 202 is installed on a vehicle. The system 100 includes the light source assembly 102 that includes a polarizing film, the camera assembly 104 that includes a polarization camera, a light trap 204, a light trap 206, and a dark box 208.

In some embodiments, the light source assembly 102 comprises a polarized light source (e.g., a polarized blue light source or a polarized white light source) and a polarization film attached to the polarized light source at zero degrees. The polarized light source may emit collimated blue light, which is then polarized by the polarization film to generate the polarized light 120. The polarized light 120 may be directed toward the windshield 202 at an angle 210 of approximately sixty degrees relative to the vertical axis of the windshield 202 for enhancing the visibility of residues on the windshield 202. As noted above, the angle 210 may be the Brewster's angle, with a tolerance of plus or minus five to ten degrees, depending on the material and curvature of the windshield 202.

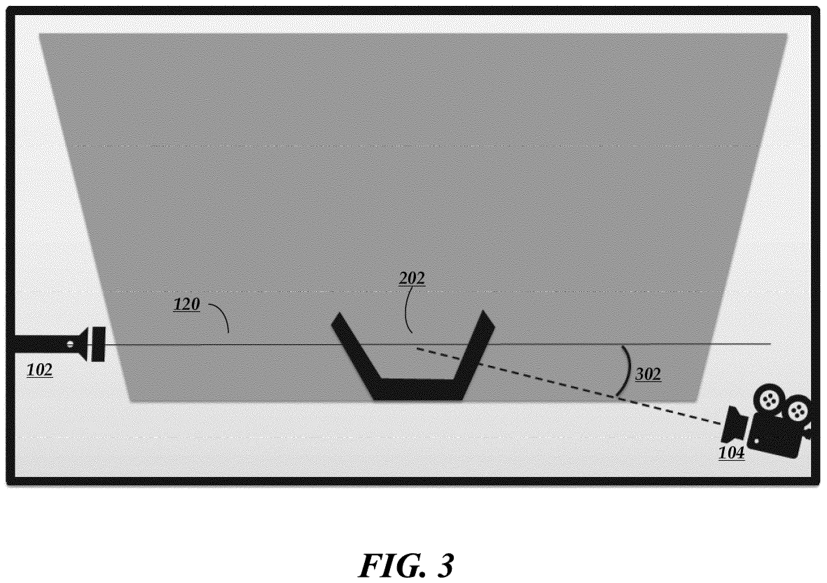

The camera assembly 104 includes a polarization camera positioned to capture the polarized light 120 reflected from the windshield 202. As noted above, the polarization camera may be set at an azimuth angle (illustrated in FIG. 3) of approximately thirty degrees to avoid direct reflection of the spotlight and to capture higher signal level. The polarization camera's FOV may be aligned to ensure that a frit region of the windshield 202 is within the image boundaries and is fully illuminated and in focus.

Light traps 204 and 206 can be deployed to absorb any stray light and reduce or eliminate unwanted reflections from interfering with the polarization camera's capture of the reflected polarized light 120. The light traps 204 and 206 can help maintain a controlled environment, ensuring that the polarization camera may detect the light reflected from the windshield 202 without detecting a significant amount of other light, thereby improving the accuracy and reliability of the system 100.

As noted above, at least the light source assembly 102, the camera assembly 104, and the windshield 202 can be enclosed in a dark box 208 or a dark room to significantly reduce or eliminate ambient light and further reduce reflections, ensuring that the polarized light 120 received by the camera assembly 104 is strong and clear. This controlled environment can be beneficial for achieving repeatable and reliable results in detecting and quantifying residues on the windshield 202 and other windshields.

FIG. 3 illustrates another perspective view of the setup of the system 100 of FIG. 1 in accordance with embodiments of the present disclosure. As shown in FIG. 3, the camera assembly 104 can include a polarization camera of the camera assembly 104 for capturing the polarized light 120 reflected from the windshield 202. In some embodiments, the polarization camera is set at an azimuth angle 302 of approximately 30 degrees with a tolerance of plus or minus five to fifteen degrees for better capturing (e.g., with higher captured light strength) the polarized light 120. As noted above, the polarization camera's FOV is aligned to ensure that a frit region of the windshield 202 is within the image boundaries of the image 140 and is fully illuminated and in focus.

### Example Residue Detection Process

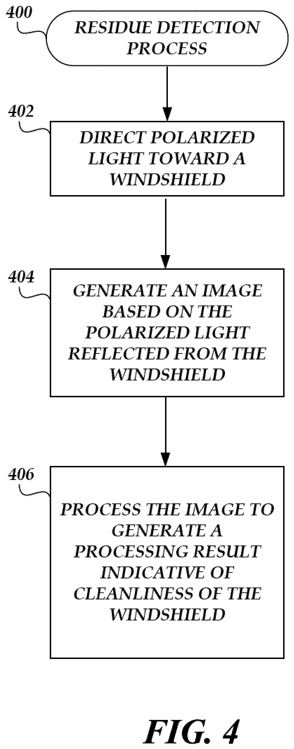

FIG. 4 illustrates an example residue detection process 400 for detecting residue on surface associated with a vehicle (e.g., the windshield 202 of FIG. 2) in accordance with embodiments of the present disclosure. For example, the residue detection process 400 can be performed by the system 100 for directing the polarized light 120 toward the windshield 202, generating the image 140 based on the polarized light 120 reflected from the windshield 202, and processing the image 140 to generate the processing result 160 indicative of the cleanliness of the windshield 202. The residue detection process 400 can be performed prior to the windshield 202 being installed by a vehicle.

At block 402, the system 100 can direct polarized light toward the surface associated with the vehicle. For example, the light source assembly 102 can direct the polarized light 120 toward the windshield 202 as illustrated by the setup of FIG. 2. As noted above, the light source assembly 102 may employ a light source (e.g., a collimated LED) for emitting a collimated light to uniformly illuminate the windshield 202 for capturing high quality images. To enhance contrast of residues on the windshield 202, the light source assembly 102 may polarize the collimated light (e.g., using a polarizing film) to generate polarized light (e.g., polarized blue light) for illuminating the windshield 202. In some applications, the light source can be a polarized light source. The polarized light 120 can interact differently with clean and contaminated areas of the windshield 202 (e.g., the polarized light 120 may be reflected more in the contaminated areas), making residues more visible when inspected or analyzed through image(s) generated by a polarization camera of the camera assembly 104. In some embodiments, the light source (e.g., a blue light source, a white light source, or any other suitable colored light source) may be positioned at an angle at or close to the Brewster angle relative to the vertical axis of the windshield 202, thereby increasing the contrast between clean and contaminated areas and/or reduce unwanted reflections from the windshield 202.

At block 404, the system 100 can generate an image based on the polarized light reflected from the windshield 202. For example, the camera assembly 104 can capture the polarized light 120 reflected from the windshield 202 to generate the image 140. As noted above, the reflected light from the windshield 202 of the vehicle can be captured using a polarization camera of the camera assembly 104. The polarization camera may include a monochrome sensor for generating polarized images in one or more polarization directions in certain applications. For example, the polarized images may be associated with four polarization directions (e.g., 0 degrees, 45 degrees, 90 degrees, and 135 degrees). The polarization camera may include a colored sensor for generating polarized images in one or more polarization directions in some applications. To increase the amount of reflected light captured for generating polarized images, the camera assembly 104 may utilize the polarization camera to capture the reflected light under an azimuth angle.

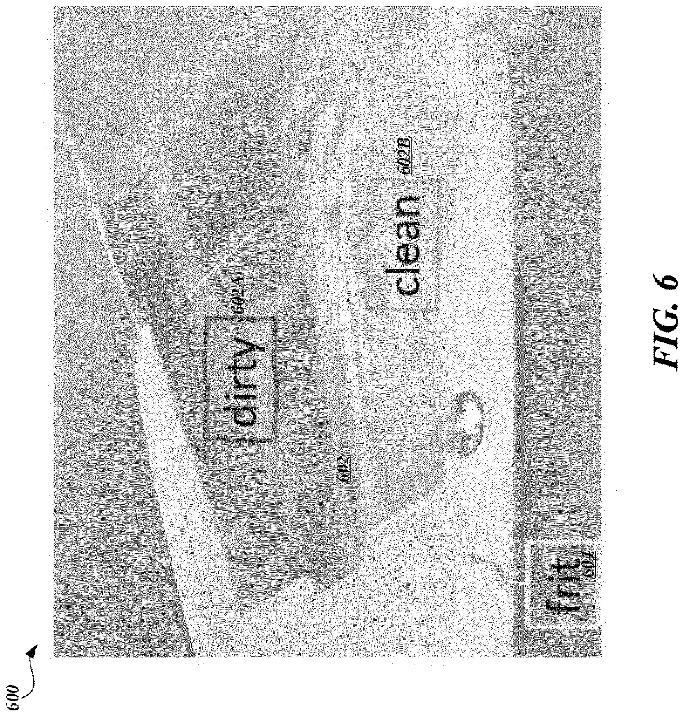

At block 406, the system 100 can process the image to generate a processing result indicative of cleanliness of the windshield. For example, the computing device 106 can process the image 140 to generate the processing result 160 indicative of cleanliness of the windshield 202. As noted above, the computing device 106 can determine or identify a region of interest (ROI) associated with the windshield 202. In some embodiments, the ROI can be determined based on a frit region associated with the windshield 202. In some embodiments, the computing device 106 may process the image 140 to calculate the degree of polarization (DoP) and the angle of polarization (AoP) for each pixel to generate the processing result. The processing result 160, the DoP and AoP generated or calculated by the computing device 106 will be illustrated with reference to FIGS. 6-9.

### Example Images and Residue Detection Results

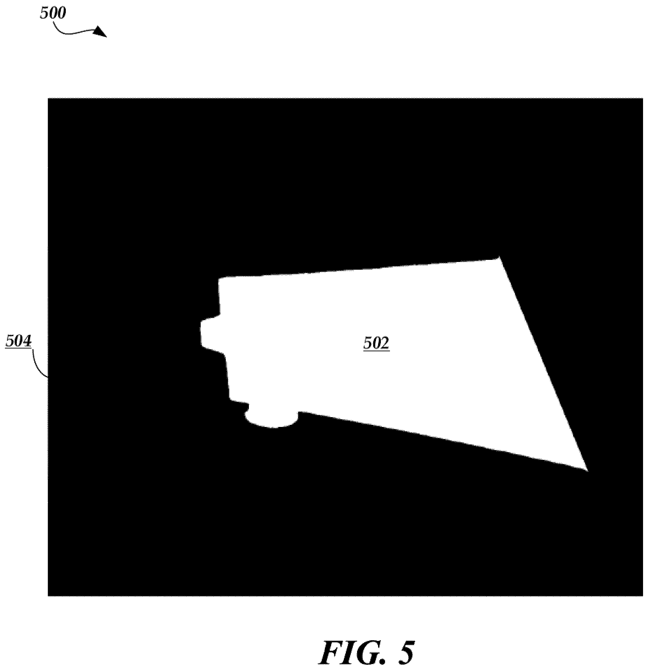

FIG. 5 shows an example image 500 that includes a ROI for windshield residue detection in accordance with embodiments of the present disclosure. The image 500 includes a ROI 502 and a surrounding region 504.

As noted above, to detect residue on the windshield, the system 100 (e.g., the computing device 106) can determine or identify the ROI 502 that can be associated with the windshield 202. The ROI 502 can correspond to a specific area of the windshield 202 that is analyzed for cleanliness, for example, using computer vision algorithms. In some embodiments, the ROI 502 can be determined based on a frit region (shown in FIG. 6) associated with the windshield 202. More specifically, the position of polarization camera of the camera assembly 104 can be adjusted to initially capture a reference image (e.g., the image 500) that includes the desired area of the windshield 202 to be analyzed. The ROI 502 can be selected based on the reference image to ensure that the frit region is within the polarization camera's FOV and does not cross the image boundaries. The system 100 (e.g., the computing device 106) can match or align one or more subsequent images that are captured for detecting residue based on the ROI 502 to ensure that the same area of the windshield 202 is consistently analyzed, thereby achieving repeatable and reliable results. Advantageously, such consistency can help achieving repeatable and reliable results in detecting and quantifying residues on the windshield 202.

The surrounding region 504 may include remaining area associated with the windshield 202. For example, the surrounding region 504 may include the frit region associated with the windshield 202. In some embodiments, the system 100 (e.g., the computing device 106) may not analyze the pixels within the surrounding region 504 of corresponding images. Advantageously, by consistently focusing analysis on the ROI 502, the system 100 can accurately detect residues and generate a cleanliness metric based on the pixels within the ROI 502 of subsequently captured images.

FIG. 6 shows an example image 600 illustrating a frit region and areas marked as clean and dirty on a windshield (e.g., the windshield 202) in accordance with embodiments of the present disclosure. The image 600 includes the ROI 602 and a frit region 604. The ROI 602 can be selected or derived based on the ROI 502 of FIG. 5. As shown in FIG. 6, within the ROI 602, there exist a dirty region 602A and a clean region 602B that are identified by the system 100.

In some embodiments, the frit region 604 may be a ceramic band around the edge of the windshield 202. The frit region 604 may help in bonding the windshield 202 to a vehicle frame. As noted above, the frit region 604 may serve as a reference point for identifying the ROI 602. In some embodiments, the dirty region 602A may correspond to area of the windshield 202 with more residue or contaminants than another area of the windshield 202. In other embodiments, the dirty region 602A may correspond to area of the windshield 202 with a significant presence of residue or contaminants. The system 100 may identify the dirty region 602A based on the reflection and scattering of polarized light 120, which is captured by a polarization camera of the camera assembly 104. In some embodiments, the clean region 602B may correspond to area of the windshield 202 that has less residue or contaminants than another area of the windshield 202. In other embodiments, the clean region 602B may correspond to area of the windshield 202 that is free from residue or contaminants. The clean region 602B may optionally be used as a baseline to compare against the dirty region 602A, thereby helping to quantify the cleanliness of the windshield 202.

In some embodiments, the system 100 may generate the image 600 to differentiate between clean and dirty areas on the windshield 202 based on the DoP and the AoP of the polarized light 120 reflected from the windshield 202. The contrast between the clean region 602B and the dirty region 602A can be enhanced by the use of the polarized light (e.g., polarized blue light), which interacts differently with residues, making them more visible in the image 600.

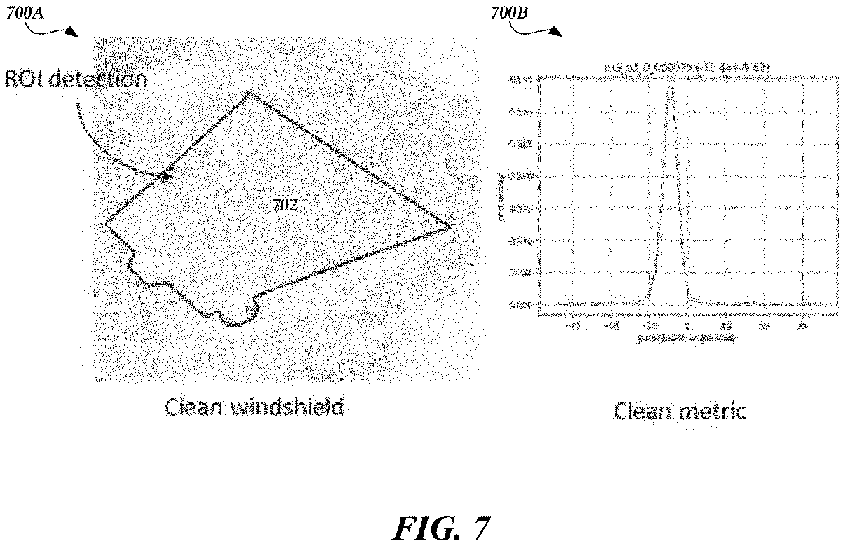

FIG. 7 shows a detected ROI on a clean windshield and the corresponding metric in accordance with embodiments of the present disclosure. FIG. 7 includes a clean windshield image 700A and a metric chart 700B. In the clean windshield image 700A, an ROI 702 is detected on a clean windshield. In the metric chart 700B, a metric is derived based on the clean windshield image 700A.

More specifically, in the clean windshield image 700A, the ROI 702 can be detected by the system 100 to define a specific area of a windshield (e.g., the windshield 202) that is analyzed for determining cleanliness. In some embodiments, the ROI 702 can be selected based on the ROI 502 to ensure that ROI 702 is within a camera's field of view (FOV) and does not cross the image boundaries. As such, the same area can be consistently analyzed in each inspection, providing repeatable and reliable results. The clean windshield image 700A may show a uniform and clear surface, indicating the absence of residues or contaminants.

In the metric chart 700B, a metric is derived from analyzing pixels within the ROI 702. The x-axis of the metric chart 700B shows a polarization angle (in degrees), while the y-axis represents the probability or frequency of occurrence of corresponding polarization angles. The metric can be calculated based on the DoP and the AoP of the reflected light (e.g., the polarized light 120 reflected from the windshield 202) within the ROI 702. The metric chart 700B shows a sharp peak at a specific polarization angle, indicating a relatively high level of cleanliness. The narrow distribution of the polarization angle values may suggest that the windshield surface is uniformly clean, with minimal variation in the polarization characteristics.

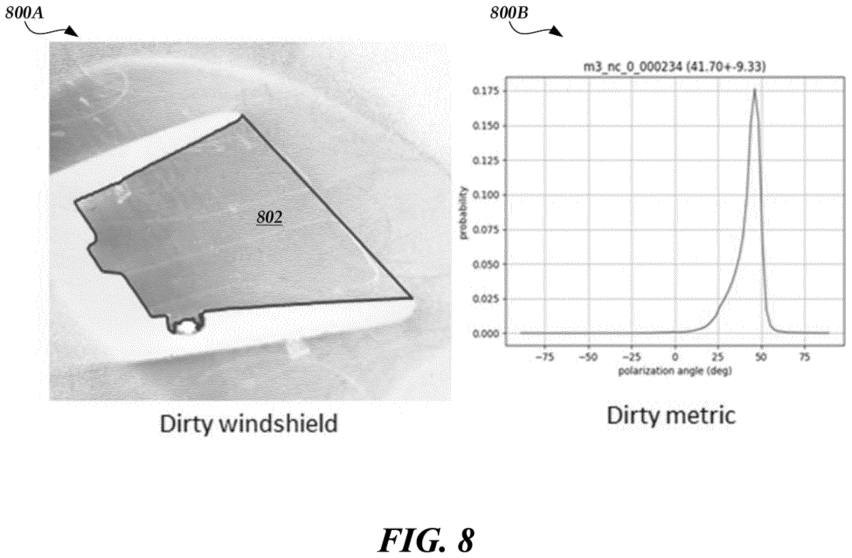

FIG. 8 illustrates an example of a dirty windshield and the corresponding cleanliness metric. FIG. 8 includes a dirty windshield image 800A and a metric chart 800B. In the dirty windshield image 800A, an ROI 802 is detected on a dirty windshield. In the metric chart 800B, a metric is derived based on the dirty windshield image 800A.

More specifically, in the dirty windshield image 800A, the ROI 802 can be detected by the system 100 to define a specific area of a windshield that is analyzed for determining cleanliness. In some embodiments, the ROI 802 can be selected based on the ROI 502 to ensure that ROI 802 is within a camera's FOV and does not cross the image boundaries. As such, the same area can be consistently analyzed in each inspection, providing repeatable and reliable results. The dirty windshield image 800A may show a non-uniform surface with visible residues or contaminants, indicating the presence of dirt or other foreign materials.

In the metric chart 800B, a metric is derived from analyzing pixels within the ROI 802. The x-axis of the metric chart 800B shows the polarization angle (in degrees), while the y-axis represents of the metric chart 800B the probability or frequency of occurrence of corresponding polarization angles. The metric can be calculated based on the DoP and the AoP of the reflected light within the ROI 802. The metric chart 800B shows a peak at a specific polarization angle, indicating the presence of residues. The broader distribution of the polarization angle values may suggest that the windshield surface is non-uniformly dirty, with significant variation in the polarization characteristics.

FIG. 9 illustrates two-dimensional (2D) histograms of the degree of polarization and angle of polarization for different cleanliness levels within a ROI in accordance with embodiments of the present disclosure. As shown in FIG. 9, a histogram 900A, a histogram 900B, and a histogram 900C provide visual representations of the polarization characteristics of the reflected light, which can be used to assess the cleanliness of a surface associated with a vehicle (e.g., the windshield 202).

The histogram 900A represents a windshield with a relatively higher level of residue or contamination. The x-axis shows the degree of polarization, ranging from 0.0 to 1.0, while the y-axis shows the angle of polarization, ranging from -90 to 90 degrees. The color intensity in the histogram indicates the frequency of occurrence of specific DoP and AoP values. In the histogram 900A, there is a significant spread in both the DoP and AoP values, indicating a higher level of residue or contaminants on the windshield. The presence of multiple clusters and a broader distribution may suggest non-uniform contamination.

The histogram 900B represents a windshield with a moderate level of contamination. Similar to the histogram 900A, the x-axis shows the degree of polarization, and the y-axis shows the angle of polarization. The color intensity indicates the frequency of occurrence of specific DoP and AoP values. In histogram 900B, there is a more concentrated cluster of DoP and AoP values compared with the histogram 900A, indicating a moderate level of residue. The distribution is narrower, suggesting more uniform contamination but still significant enough to be detected.

The histogram 900C represents a clean windshield. The x-axis shows the degree of polarization, and the y-axis shows the angle of polarization. The color intensity indicates the frequency of occurrence of specific DoP and AoP values. Compared with the histograms 900A and 900B, the histogram 900C shows a narrower distribution of DoP and AoP values, indicating a higher level of cleanliness. The more concentrated cluster shown in the histogram 900C may suggest less variation in the polarization characteristics, which corresponds to a more uniformly clean surface.

FIGS. 6-9 demonstrate the ability of the system 100 to detect and quantify the cleanliness of windshields by detecting ROIs, generating cleanliness metrics, and DoP and AoP values. The generated metrics and DoP and AoP values may provide quantitative measures of windshields' cleanliness, thereby ensuring that only clean windshields are shipped for further use. A processing result indicative of cleanliness of the windshield can include or be derived from one or more of the clean metric of FIG. 7, the clean metric of FIG. 8, or data associated with one or more of the histograms of FIG. 9.

### Conclusion

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the example, some acts, events, or functions of any of the algorithms described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

The various illustrative logical blocks and modules described in connection with the examples disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combination of the same, or the like. A processor can include electrical circuitry to process computer-executable instructions. In some examples, a processor includes an FPGA or other programmable device that performs logic operations without processing computer-executable instructions. A processor can also be implemented as a combination of computing devices, for example, a combination of a DSP and a microprocessor, a plurality of microprocessors, microprocessors in conjunction with a DSP core, or any other such configuration. Although described herein primarily with respect to digital technology, a processor may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The processes described herein or illustrated in the figures of the present disclosure may begin in response to an event, such as on a predetermined or dynamically determined schedule, on demand when initiated by a user or system administrator, or in response to some other event. When such processes are initiated, a set of executable program instructions stored on one or more non-transitory computer-readable media (e.g., hard drive, flash memory, removable media, etc.) may be loaded into memory (e.g., RAM) of a server or other computing device. The executable instructions may then be executed by a hardware-based computer processor of the computing device. In some embodiments, such processes or portions thereof may be implemented on multiple computing devices and/or multiple processors, serially or in parallel.

Conditional language such as, among others, "can," "could," "might" or "may," unless specifically stated otherwise, are otherwise understood within the context as used in general to convey that some examples include, while other examples do not include, some features, elements and/or steps. Thus, such conditional language is not generally intended to imply that features, elements and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements or blocks in the flow diagrams described herein and/or depicted in the attached figures should be understood as potentially representing modules, segments, or portions of code which include executable instructions for implementing specific logical functions or elements in the process. Alternate examples are included within the scope of the examples described herein in which elements or functions may be deleted, executed out of order from that shown, or discussed, including substantially concurrently or in reverse order, depending on the functionality involved as would be understood by those skilled in the art.

It should be emphasized that many variations and modifications may be made to the above-described examples, the elements of which are to be understood as being among other acceptable examples. All such modifications and variations are intended to be included herein within the scope of this disclosure.

Any process descriptions, elements or blocks in the flow diagrams described herein and/or depicted in the attached figures should be understood as potentially representing modules, segments, or portions of code which include executable instructions for implementing specific logical functions or elements in the process. Alternate implementations are included within the scope of the examples described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

## Claims

1. A method for detecting residues on a windshield, the method comprising:
directing polarized light toward the windshield;
generating an image based on the polarized light reflected from the windshield; and
processing the image to generate a processing result indicative of cleanliness of the windshield.

2. The method of Claim 1, wherein the polarized light is a blue polarized light.

3. The method of Claim 1 or 2, wherein processing the image comprises:
identifying, based at least on a frit region associated with the windshield, a region of interest (ROI) associated with the image; and
calculating, based on pixels within the ROI associated with the image, one or more metrics,
wherein the processing result is generated based on the one or more metrics.

4. The method of Claim 3, wherein the one or more metrics are calculated based on at least one of an angle of polarization associated with the image or a degree of polarization associated with the image.

5. The method of Claim 3 or 4, wherein calculating the one or more metrics comprises:
deriving angles of polarization associated with the image; and
deriving a mean and a standard deviation associated with the angles of polarization.

6. The method of one of the preceding Claims, wherein the image is associated with four polarization directions; and/or
wherein the polarized light is directed toward the windshield at an angle in a range from 50 degrees to 70 degrees; and/or
wherein the polarized light is captured at an azimuth angle that is in a range from 15 degrees to 45 degrees.

7. The method of one of the preceding Claims, wherein directing the polarized light comprises:
emitting a collimated light; and
polarizing, using a polarizing film, the collimated light to generate the polarized light.

8. A system for detecting residues on a surface associated with a vehicle, the system comprising:
a light source assembly configured to direct a polarized light toward the surface;
a camera assembly configured to capture the polarized light reflected from the surface to generate an image; and
a computing device in communication with the camera assembly, the computing device configured to process the image to generate a processing result indicative of cleanliness of the surface.

9. The system of Claim 8, further comprising a dark box configured to enclose the light source assembly, the camera assembly, and the surface associated with the vehicle.

10. The system of Claim 8 or 9, wherein the light source assembly comprises:
a light source configured to emit a collimated light; and
a polarizing film configured to polarize the collimated light to generate the polarized light.

11. The system of one of Claims 8 to 10, wherein the camera assembly comprises a sensor configured to generate the image in four polarization directions.

12. The system of one of Claims 8 to 11, wherein the surface is a windshield, and wherein the computing device is configured to process the image by at least:
identifying, based at least on a frit associated with the windshield, a region of interest (ROI) associated with the image; and
calculating, based on pixels within the ROI associated with the image, one or more metrics,
wherein the processing result is generated based on the one or more metrics.

13. The system of Claim 12, wherein the one or more metrics are calculated based on at least one of an angle of polarization associated with the image and a degree of polarization associated with the image.

14. The system of Claim 12 or 13, wherein the computing device is configured to calculate the one or more metrics by at least:
deriving angles of polarization associated with the image; and
deriving a mean and a standard deviation associated with the angles of polarization as the one or more metrics.

15. The system of one of Claims 8 to 14, wherein the light source assembly is configured to direct the polarized light toward the surface at an angle in a range from 55 degrees to 65 degrees; and/or
wherein the camera assembly is configured to capture the polarized light at an azimuth angle in a range from 15 degrees to 45 degrees; and/or
wherein the polarized light is a polarized blue light or a polarized white light.
